# EUROPEAN PATENT APPLICATION

(11) **EP 4 512 366 A1**
(43) Date of publication of application: **26.02.2025**
(21) Application number: 23792173.9
(22) Date of filing: 19.04.2023
(51) Int. Cl.: A61C 8/00

(54) **ABUTMENT FOR DENTAL IMPLANTS**

(30) Priority: 22.04.2022 KR 20220050052
(71) Applicant: Denflex Co., Ltd., Seoul 08381 (KR)
(72) Inventor: KIM, Hyung-Woo, Goyang-si Gyeonggi-do 10374 (KR)
(74) Representative: Lermer, Christoph
(86) International application number: PCT/KR2023/005302
(87) International publication number: WO 2023/204599

(57) **Abstract**

The present invention relates to an abutment for dental implants. The abutment for dental implants according to the present invention is characterized by comprising: a prosthesis fastening protrusion which is formed such that an upper end of an upper portion of an abutment on which the prosthesis is mounted has an outer diameter larger than that of a portion directly below the upper portion thereof, the prosthesis fastening protrusion protruding outward; and an incision part for dividing the upper portion of the abutment into a plurality of segments, wherein when the prosthesis fastening protrusion is viewed in a horizontal cross-sectional view, the distance values from the vertical central axis (C) of the abutment to the outer surface of the fastening protrusion are different depending on location. Preferably, when the prosthesis fastening protrusion is viewed in the horizontal cross-sectional view, the distance values from the vertical central axis (C) of the abutment to the outer surface of the fastening protrusion is continuously reduced toward the incision part, and the distance value is the largest at a central portion (F) of the outer surface of the segments divided by the incision part.

## Description

### Technical Field

The present disclosure relates to an abutment for dental implants to which a prosthesis is fastened on top in dental implants.

### Background Art

In general, a dental implant, which is a replacement for a lost natural tooth, refers to a replacement for a natural tooth that recovers the original function of a tooth by implanting a fixture into the alveolar bone and allowing it to fuse with the alveolar bone for a specified period, and then fixing an abutment and a prosthesis such as an artificial tooth on the fixture.

Implants that are used for a dental implant procedure are composed of a fixture that has threads formed on the outer circumferential surface to be able to be implanted into the alveolar bone and has a hole formed on the vertical center axis, an abutment of which the lower portion is inserted into the hole of the fixture and to which a prosthesis is attached on top, and a fixing screw that firmly fixes the fixture and the abutment by fastening them, in which the abutment has a screw insertion hole formed on the vertical center axis thereof. Depending on cases, the abutment and the fixing screw are integrated.

That is, an abutment is fastened and fixed to a fixture by a separate fixing screw or a fixing screw integrally formed on the lower portion thereof. Separate fixing screws of the related art are composed of a head, a threaded portion, and a body connecting the head and the thread, and a polygonal groove in which dental tools are inserted is formed on the top of the head, and threads are formed on the lower portion of the body, thereby forming the threaded portion.

Abutments that are provided with a separate fixing screw that is fastened to a fixture has a screw insertion hole formed through it from the top to the bottom, the outer surface of the abutments are composed of a portion that is inserted into the hole of a fixture and a portion to which a prosthesis is attached, and a fixing screw anti-descending step D with which the bottom C of the head of a fixing screw comes in contact is formed on the inner surface of the screw insertion hole.

In the separation type of abutment and fixing screw, when the fixing screw is fastened, an operator puts the abutment into the hole of the fixture and then inserts the fixing screw into the hole of the fixture through an insertion hole of the abutment. Then, the operator fits a dental tool such as a screwdriver into the polygonal hole formed on the top of the head of the fixing screw and turns the fixing screw, whereby the bottom C of the head of the fixing screw comes in contact with the fixing screw anti-descending step D, which is formed on the inner surface of the screw insertion hole of the abutment to prevent downward movement of the fixing screw, and the head of the fixing screw presses the abutment toward the fixture. Accordingly, strong tension is applied between the head and the threaded portion of the fixing screw with the threads on the outer surface of the fixing screw and the threads on the inner surface of the hole of the fixture engaged, whereby the abutment is firmly fixed to the fixture by the fixing screw and a prosthesis is attached to the firmly fixed abutment using an adhesive.

However, according to the implants of the related art that obtain a fastening force for a fixture and an abutment by strongly tightening a screw and fix a prosthesis using an adhesive, since a fixing screw (i.e., a kind of male screw) of the related art is fastened into the hole (i.e., a kind of female screw) of a fixture and then strongly tightened, so tension is longitudinally applied to the fixing screw, and accordingly, a considerable fastening force is obtained by strong close contact between the upper surfaces of the threads of the fixing screw and the lower surfaces of the threads of the hole of the fixture, but there are fundamental problems or limitations as follows.

For example, assuming that tension, which is generated between the head and the threaded portion of a fixing screw and enables the fixing screw to sufficiently and strongly fix an abutment in a fixture when the fixing screw is strongly tightened, is N, when tension generated by tightening a fixing screw is smaller than N, there is a problem that expected tension cannot be sufficiently obtained, so it is difficult to obtain strong fastening force.

That is, when tension smaller than N is applied between the head and the threaded portion of a fixing screw due to weak tightening, the close contact force of the upper surfaces of the threads of the fixing screw with the lower surfaces of the threads of the inner surface of the hole of the fixture also decreases, so the fastening force of the threads decreases. In this state, the fixing screw is gradually loosened even by small rotation force that is generated by continuous vibration, shock, etc. due to occlusal force that is applied to a prosthesis, the abutment coupled to the fixture often becomes loose.

Further, when the material of a fixing screw is permanently deformed by excessively tightening the fixing screw to apply tension much stronger than N so that the fixing screw is not loosened to prevent the above phenomenon, fatigue accumulates in the material itself of the fixing screw, so there is also a problem that when another shock such as occlusal force is continuously applied to the fixing screw, the fixing screw may more easily fracture.

Further, the abutments of the related art have a problem that when occlusal force is continuously applied to the abutments in various directions, the stress that is applied is transmitted to a fixing screw without attenuation and continuously accumulates between the head and the threaded portion of the fixing screw, whereby the fixing screw loosens and fractures.

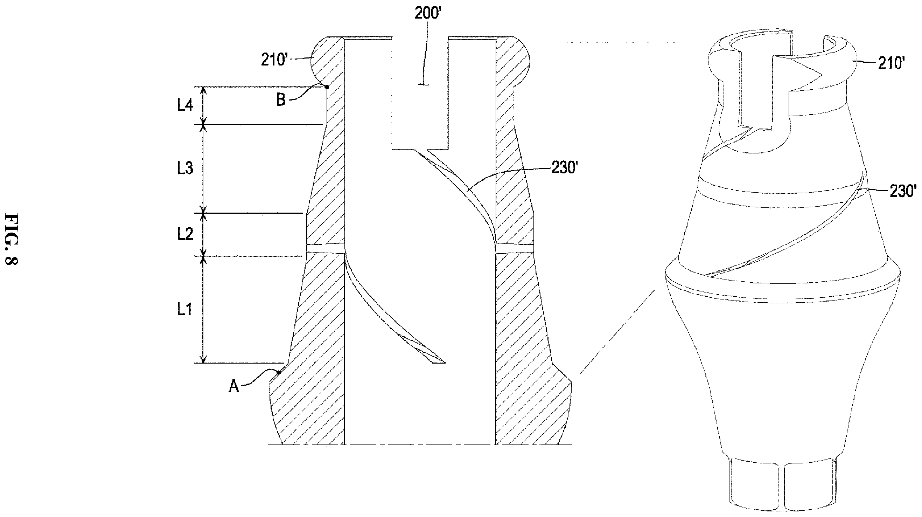

As an example, as shown in FIG. 8, there is a problem when lateral occlusal force is applied to an abutment, a rotation force is generated on the abutment at the portion where the abutment and a fixture are in close contact, and a force that pushes up a fixing screw applying strong force to firmly press the abutment downward is generated, whereby such stress continuously accumulates and fractures the fixing screw.

In an internal type in which the lower portion of an abutment is inserted and fastened in the hole of a fixture, sinking that the position of an abutment is moved downward over time from the vertical position in the hole of a fixture when the abutment has been initially tightened by a fixing screw due to occlusal force that is continuously applied without attenuation after the fixture and the abutment are fastened generally occurs. In this case, a gap is generated between the bottom C of the head of the fixing screw and the fixing screw anti-descending step D formed on the inner surface of the screw insertion hole of the abutment, so the head of the fixing screw no longer presses down and fixes the abutment to the fixture. Further, tension is not generated between the head and the threaded portion of the fixing screw, so the upper surfaces of the threads formed on the fixing screw are not strongly in close contact with the lower surfaces of the threads formed on the inner surface of the hole of the fixture. In this state, the abutment is moved in the hole of the fixture, and stress is not uniformly distributed and concentrated on any one position every time occlusal force is applied in various directions. As a result, there are problems of breakage of the alveolar bone, fracture of the abutment neck, fracture of the fixture, fracture of the fixing screw, loosening of the fixing screw, etc. In general, in order to solve the problems due to sinking, there is a problem that existing abutments require a troublesome method of initially fastening a fixing screw and tightening again the fixing screw after using the implant for a predetermined period such that occlusal force is applied to the abutments in order to strongly bring the head of the fixing screw and a surface of the abutments in close contact. Further, when later force is continuously applied to a prosthesis even though a fixing screw strongly presses an abutment to a fixture with the head in contact with a surface of the abutment, tension, lateral force, etc. are transmitted to the fixing screw through the abutment, so the fixing screw loosens or fractures.

Further, there is a problem that when a fixing screw fractures due to various reasons described above, in the related art, it takes a lot of time and effort to remove fractures of the fixing screw remaining fastened to the female section on the inner surface of the hole of a fixture, and, if severe, it is impossible to completely remove the fractures of the fixing screw, depending on cases.

As described above, abutments of the related art without the function of attenuating occlusal force cause many problems.

Further, according to abutments of the related art, even after an abutment is coupled to a fixture, in order to couple a prosthesis to the upper portion of the abutment, an additional adhesive is applied to the inside of the prosthesis and the upper portion of the abutment, the prosthesis is fitted onto the upper portion of the abutment, and then the prosthesis is pressed toward the abutment (i.e., downward) for a considerable time, whereby it is possible to attach a prosthesis to the upper portion of an abutment. In this case, an operator has to additionally apply an adhesive to attach a prosthesis and later has to individually remove any residual adhesive remaining between the prosthesis and the abutment/gum after the adhesive is hardened, and a patient has to wait with the prosthesis pressed toward the gum while the adhesive is hardened, that is, there is a problem of causing a lot of inconvenience and discomfort during a procedure.

Further, when a prosthesis is fixed to an abutment using an adhesive, there is a problem that the adhesive is separated by continuous occlusal force and the prosthesis is frequently separated from the abutment, and when it is required to remove the prosthesis fixed to the abutment due to any problem, there is a problem that it takes a lot of time to remove it and substantial pain is caused to the patient.

### Disclosure

### Technical Problem

An objective of the present disclosure is to provide an abutment for dental implants in which cut portions starting from the top of the abutment to which a prosthesis is coupled and continuously extending downward in a predetermined section and dividing the upper portion of the abutment into a plurality of segments are provided, predetermined sections of the cut portions dividing the upper portion of the abutment into a plurality of segments are spirally or diagonally formed to improve elasticity of the segments influencing the function of attenuating occlusal force, thereby being able to remove inconveniences and increase the lifespan of implants by maximizing elastic restoring force by increasing the lengths of the segments and forming the segments in a helix shape, and by solving the problems of implants of the related art that are generated because there is no function of attenuating occlusal force by providing a function of attenuating shock using strong elasticity when occlusal force is applied.

Another objective of the present disclosure is to provide an abutment for dental implants in which cut portion widths at lower portions of cut portions dividing the upper portion of the abutment into a plurality of segments are formed remarkably smaller than the cut portion widths at upper portions to reinforce strength by increasing the volume of the segments, and the cut portions are spirally or diagonally formed to form inclined surfaces and quickly come in contact with adjacent segments even in small deformation in comparison to cut portions, which are vertically formed, by the remarkably reduced cut portion widths at the lower portions and the inclined surfaces formed by the spiral cut portions when the cut portions are deformed by occlusal force so that the occlusal force is distributed well to adjacent segments.

In general, in the present disclosure, in order to achieve the function of attenuating occlusal force after a prosthesis is fixed to an abutment of which the upper portion is divided into a plurality of segments by cut portions, when occlusal force is applied to the plurality of segments separated by the cut portions formed at the upper portion of the abutment, the segments need to attenuate the occlusal and need to be restored through elastic movement, so the gaps between the segments should not be filled with any hardened substance even after a prosthesis is fixed to the abutment. For this reason, when an adhesive filling the gaps between segments is used as a method for fixing a prosthesis to an abutment, the adhesive fills the gaps of the segments and then hardens, so the segments cannot elastically move, and accordingly, the function of attenuating shock is substantially lost. Another objective of the present disclosure, in order to solve this problem, is to provide an abutment for dental implants having a function of attenuating occlusal force because prosthesis fastening protrusion s having a diameter larger than the diameter of the portion right under the upper portion of the abutment divided into a plurality of segments for elastic coupling of a prosthesis and the abutment are provided, so when a prosthesis is fitted onto the upper portion of the abutment for dental implants, the plurality of segments are elastically deformed while entering a coupling hole of the prosthesis and then restored and the prosthesis fastening protrusions at the upper portion of the abutment are fitted into a corresponding fastening groove in the coupling hole of the prosthesis, whereby the prosthesis fastening protrusions can be simply and firmly fitted in the corresponding fastening groove by the elastic restoring force of the plurality of segments without an additional adhesive.

Another objective of the present disclosure is to provide an abutment for dental implants having a function of attenuating occlusal force because spiral, diagonal, or vertical slots having closed upper and lower ends are formed with regular intervals circumferentially on the lower portion of the abutment that is inserted into a hole of a fixture, so when a fixing screw is strongly tightened, a plurality of independent surfaces circumferentially formed comes in close contact with an inclined surface of the inner surface of the hole of the fixture while deforming within the range of elasticity by the slots, in which elastic resilience that is generated by the surfaces that come in close contact with the inclined surface while deforming within the range of elasticity generates force that pushes up the abutment, and as a result, force that continuously pushes up a fixing screw in contact with a fixing screw anti-descending step D of the abutment is generated such that upper surfaces 2a of threads of the fixing screw strongly come in close contact with lower surfaces 3a of threads formed on the inner surface of the hole of the fixture, whereby loosening of the fixing screw is prevented and the abutment can be restored after elastic deforming even when occlusal is applied.

Another objective of the present disclosure is to provide an abutment for dental implants having a fixing screw in which the fixing screw is configured to have sufficient tension, elastic restoring force, and function of attenuating shock by helix-shaped spiral cut portions, which are formed at the upper portion or lower portion of threads of the fixing screw, equally divides a transverse plane perpendicular to a vertical center axis of a body while horizontally crossing a vertical center axis of the fixing screw, and has a predetermined length up and down, so it is possible to maintain strong fastening force for a long time, and the fixing screw can be prevented from fracturing due to accumulation or concentration of stress by efficiently attenuating occlusal force that is continuously applied laterally or in various directions.

Another objective of the present disclosure is to make it possible to easily remove fractures of a fixing screw remaining at a female thread portion on the inner surface of a hole of a fixture by inserting and turning a flathead screwdriver in a straight cut portion exposed on a fractured cross-section even though a fixing screw fractures.

Another objective of the present disclosure is to make is possible to easily remove a portion of a fixing screw when the fixing screw fractures because the upper surfaces 12a of threads of the fixing screw and the lower surface 3a of threads formed on the inner surface of a hole of a fixture are strongly engaged by elasticity generated by spiral cut portions between a head and a threaded portion of the fixing screw and there is no cold pressure welding phenomenon.

Another objective of the present disclosure is to enable a helix-shaped section to be deform within the range of elasticity and strongly coupled when an abutment and a fixture are fastened by spirally forming the cut portions over the threaded portion of a fixing screw in a helix shape in a predetermined section to have strong elastic restoring force, and is to enable the helix-shaped section to bring an abutment and a fixture into close contact using force over a predetermined level while elastically deforming even without a process of tightening again the fixing screw even through sinking, in which an internal-type abutment is moved down by continuous occlusal force after the abutment is initially fastened, is generated.

Further, another objective of the present disclosure is to make it possible to secure structural strength of a prosthesis fastening protrusion because it is not required to remove portions where prosthesis fastening protrusions interfere of some abutments interfere with a coupling hole of a fixture when the prosthesis is fitted, or it is not required to change a structure such as increasing the width of cut portions of the abutments.

Further, another objective of the present disclosure is to make it possible to prevent rotation of a prosthesis and specify a fastening position of the prosthesis even without forming a separate plane portion on an abutment because prosthesis fastening protrusion s, which are configured to protrude at different levels outward from the outer surfaces of a plurality of segments separated by cut portions formed at the upper portion of the abutment, are inserted into a coupling hole of a prosthesis and fitted into a corresponding shape of a fastening groove of the prosthesis.

### Technical Solution

An embodiment of the present disclosure for achieving the objectives described above is an abutment for dental implants, and the abutment includes: prosthesis fastening protrusions formed such that an outer diameter of an upper end of an upper portion of the abutment on which a prosthesis is mounted is larger than an outer diameter of a portion right under the upper end, and protruding outward; and cut portions dividing the upper portion of the abutment into a plurality of segments, wherein prosthesis fastening protrusions have shapes in which distance values from a vertical center axis (C) of the abutment to outer surfaces of the fastening protrusions are different, depending on positions, when in a horizontal cross-sectional view.

Preferably, the prosthesis fastening protrusion has a shape in which, when seen in a horizontal cross-sectional view, a distance value from the vertical center axis (C) of the abutment to an outer surface of the fastening protrusion continuously decreases as going to the cut portions, and the distance value is the largest at centers (F) of outer surfaces of segments separated by the cut portions.

### Advantageous Effects

According to the present disclosure, it is possible to maintain strong fastening force for a long time by coupling a prosthesis to the upper portion of an abutment through simple operation without an adhesive. It is possible to prevent loosening and fracturing of a fixing screw due to accumulation and concentration of stress by efficiently attenuating occlusal force that is continuously applied in various direction. It is possible to prevent a cold pressure welding phenomenon of an abutment to an insertion portion of a hold of a fixture, so it is possible to easily remove an abutment from a fixture when it is required to separate the abutment. It is possible to easily remove fractures of a fixing screw remaining at a female thread portion on the inner surface of a hole of a fixture by inserting and turning a flathead screwdriver in a cut portion exposed on a fractured cross-section even though a fixing screw fractures. When coupling a prosthesis, it is not required to remove portions that interfere with a coupling in fitting or change a structure such as increasing the width of cut portions, so it is possible to sufficiently ensure structural strength of prosthesis fastening protrusion s and it is possible to prevent rotation of a prosthesis and specify a fastening position of the prosthesis even without forming a separate plane portion on an abutment.

### Description of Drawings

FIG. 1a is a perspective view of a fixing screw according to an embodiment of the present disclosure.
FIG. 1b is an A-A cross-sectional view of FIG. 1a and is also a perspective view showing the fracture surface.
FIG. 2a is a perspective view of an abutment for implants according to an embodiment of the present disclosure.
FIG. 2b is a perspective view of an abutment for implants according to another embodiment of the present disclosure.
FIG. 3a is a cross-sectional view showing the state in which a fixing screw of FIG. 1a separately provided in accordance with an embodiment of the present disclosure has been coupled to the abutment for implants of FIG. 2a.
FIG. 3b is a conceptual view showing the operation of a fixing screw to an abutment for implants in the coupled state of FIG. 3a.
FIG. 4a is a perspective view of an abutment for implants according to another embodiment of the present disclosure.
FIG. 4b is a perspective view of an abutment for implants according to another embodiment of the present disclosure.
FIG. 5a is a cross-sectional view of a fixing screw according to another embodiment of the present disclosure and FIG. 5b is a conceptual view showing the operation of the fixing screw shown in FIG. 5a.
FIG. 6 is a perspective view of a fixing screw according to another embodiment of the present disclosure.
FIG. 7 is a perspective view showing the state in which a prosthesis X has been coupled to the upper portion of an abutment without an adhesive in accordance with the present disclosure.
FIG. 8 is a cross-sectional view of a modified embodiment in which the slope of the outer surface of an abutment has been changed in accordance with another embodiment of the present disclosure.
FIG. 9 is a perspective view of a modified embodiment of prosthesis fastening protrusions according to another embodiment of the present disclosure.
FIG. 10 is a cross-sectional view of a modified embodiment of the upper portion of an abutment according to another embodiment of the present disclosure.
FIG. 11 is a cross-sectional view of an abutment for implants according to another embodiment of the present disclosure.
FIG. 12 is a cross-sectional view of a modified embodiment of prosthesis fastening protrusions according to another embodiment of the present disclosure.
FIG. 13 is a reference view for describing effects that can be obtained when applying the abutment according to the modified embodiment shown in FIG. 12.

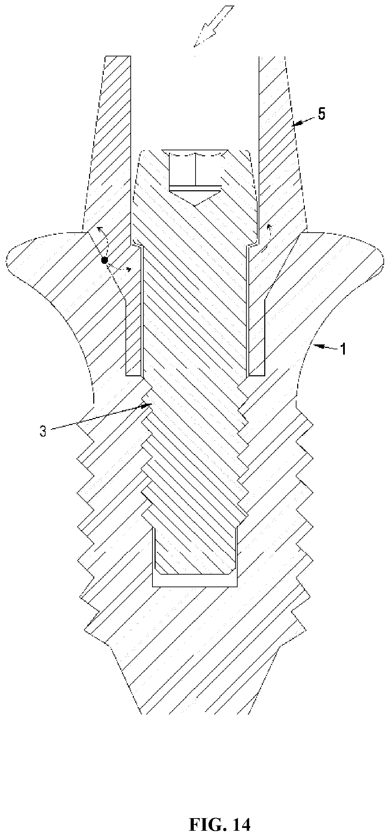

FIG. 14 is a cross-sectional view showing force the pushes up a fixing screw by rotational force that is generated when lateral occlusal force is applied to an abutment.
FIG. 15(a) is a perspective view of an abutment for implants according to another embodiment of the present disclosure and FIG. 15(b) is a plan view showing FIG. 15(a) from above.
FIG. 16(a) is a cross-sectional view showing a step in which a prosthesis X starts to be coupled to the upper portion of the abutment for implants shown in FIG. 15(a) and FIG. 16(b) shows cross-sections taken along lines B-B and C-C of FIG. 16(a).
FIG. 17(a) is a cross-sectional view showing an assumed step immediately before a prosthesis X is fastened to the upper portion of the abutment for implants shown in FIG. 15(a) and FIG. 17(b) shows a cross-section taken along line A-A of FIG. 17(a) to show interference portions that are generated when a prosthesis is coupled.
FIG. 18(a) is a plan view of modified embodiments of prosthesis fastening protrusions additionally cut to remove the interference portions shown in FIG. 17(b) and FIG. 18(b) shows cross-sectional taken along line C-C when the prosthesis fastening protrusions of FIG. 18(a) are inserted to corresponding positions of FIG. 17(a).
FIG. 19(a) is a cross-sectional view showing the state in which a prosthesis X has been fully fastened to the upper portion of the abutment for implants shown in FIG. 18(a) and FIG. 19(b) shows a cross-section taken along line D-D of FIG. 19(a).
FIG. 20(a) is a perspective view of an abutment for implants according to another embodiment of the present disclosure and FIG. 20(b) is a plan view showing FIG. 20(a) from above.
FIG. 21(a) is a cross-sectional view showing a step in which a prosthesis X starts to be coupled to the upper portion of the abutment for implants shown in FIG. 20(a) and FIG. 21(b) shows cross-sections taken along lines B-B and C-C of FIG. 26(a).
FIG. 22(a) is a cross-sectional view showing a step immediately before a prosthesis X is fastened to the upper portion of the abutment for implants shown in FIG. 20(a) and FIG. 22(b) shows a cross-section taken along line C-C of FIG. 22(a).
FIG. 23(a) is a cross-sectional view showing the state in which a prosthesis X has been fully fastened to the upper portion of the abutment for implants shown in FIG. 20(a) and FIG. 23(b) shows a cross-section taken along line D-D of FIG. 23(a).

### Mode for Invention

Hereinafter, exemplary embodiments of the present disclosure are described in more detail with reference to the drawings.

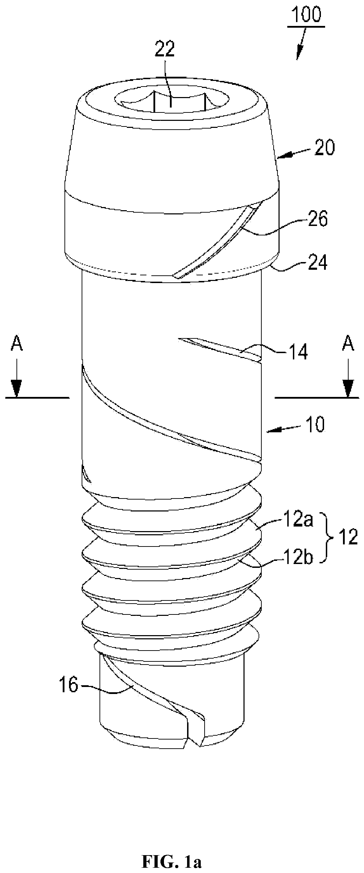

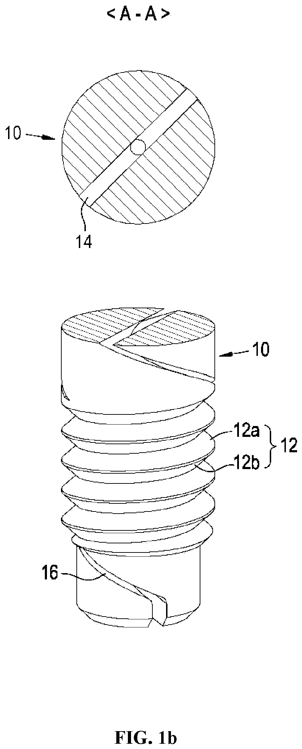

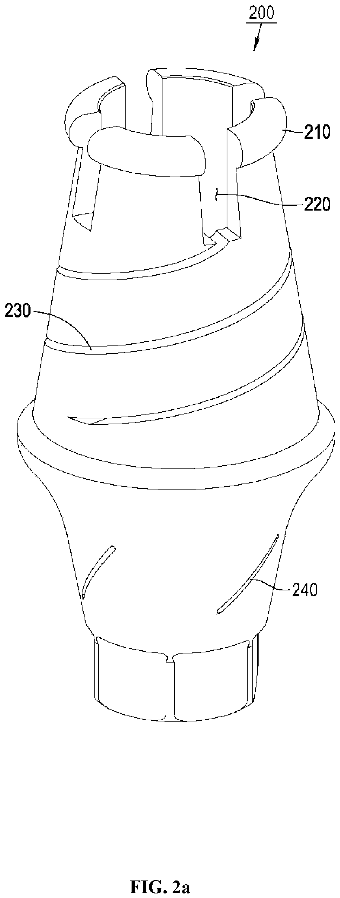

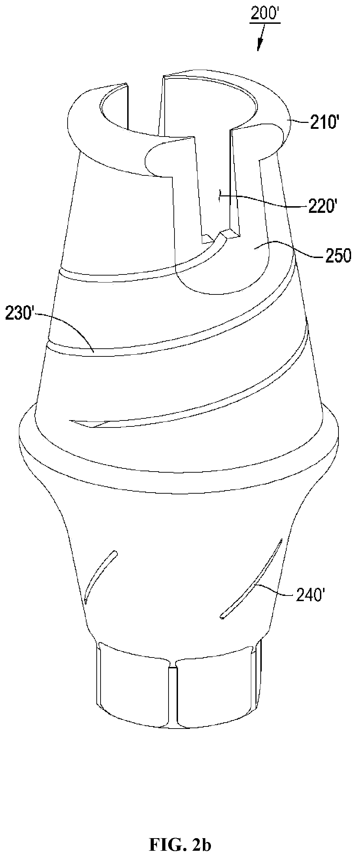

FIG. 1a is a perspective view of a fixing screw according to an embodiment of the present disclosure and FIG. 1b is an A-A cross-sectional view of FIG. 1a and is also a perspective view showing the fracture surface. FIG. 2a is a perspective view of an abutment for implants according to an embodiment of the present disclosure and FIG. 2b is a perspective view of an abutment for implants according to another embodiment of the present disclosure.

Referring to FIG. 2a, in an abutment 200 for dental implants of the present disclosure, the upper outer surface of the abutment on which a prosthesis is mounted maintains a tapered angle decreasing the outer diameter upward from the portion where the margin of a prosthesis is positioned, and is formed such that the outer diameter is increased at a portion right under the top larger than the outer diameter of the portion right under the top, whereby prosthesis fastening protrusions 210 are formed. Further, as shown in FIG. 2a and FIG. 2b, cut portions 220 and 220' dividing the upper portion of the abutment into a plurality of segments start from the top of the abutment and continuously extend downward in a predetermined section. Preferably, the cut portions 220 and 220' are formed at at least two or more positions at the upper portion of the abutment, thereby being able to divide the upper portion of the abutment into two or more segments. For reference, FIG. 2a shows that the upper portion of the abutment is divided into four segments by four cut portions and FIG. 2b shows that the upper portion of the abutment is divided into two segments by two cut portions.

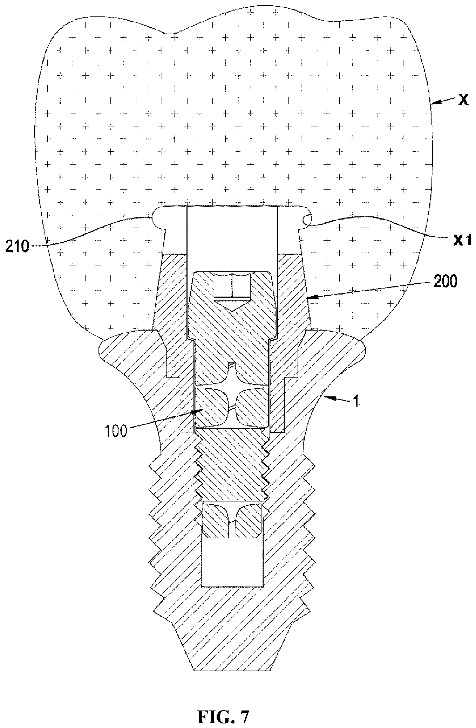

Since the upper portion of the abutment is divided into a plurality of segments by cut portions, as described above, when a prosthesis is fitted onto the upper portion of the abutment for dental implants according to the present disclosure, the plurality of segments can be elastically deformed into a coupling hole of the prosthesis. Further, when the prosthesis fastening protrusions 210 are fitted into corresponding fastening grooves X1 in the coupling hole of the prosthesis X, the prosthesis fastening protrusions 210 can be firmly fitted in the corresponding fastening grooves X1 by elastic restoring force of the plurality of segments. According to the present disclosure, as shown in FIG. 7, the prosthesis X can be coupled to the upper portion of the abutment 200 through simple operation without using an adhesive.

Preferably, a plane portion 250 is formed at a portion of the circumferential surface on which the prosthesis fastening protrusion 210' is formed, as shown in FIG. 2b. When a prosthesis is fixed, the plane portion 250 serves to specify the seating direction of the prosthesis and prevent rotation of the prosthesis after the prosthesis is seated. Preferably, the plane portion may be formed as an inclined surface having a tapered angle the same as or larger than the tapered angle of the abutment.

More preferably, the cut portion 220, 230, as shown in FIG. 2a and FIG. 2b, may start from the top of the abutment and keep extending downward in a predetermined section and then may be formed spirally or diagonally in a predetermined section. Such a spiral or diagonal cut portion is for increasing elastic deformation force and elastic restoring force of the upper portion of the abutment and for complementing the function of attenuating occlusal force of the abutment and the function of preventing loosening of a fixing screw.

That is, the cut portion 220, 230 can attenuate occlusal force while a plurality of independent surfaces circumferentially formed is deformed within the range of elasticity by the spirally or diagonally formed cut portion. In particular, since the plurality of circumferentially formed independent surfaces is continuously deformed and restored within the limit of elastic deformation, continuous occlusal force that is applied in mastication can be attenuated.

In particular, the downward cutting direction of the cutting section of the spiral or diagonal cut portion formed in a predetermined section may be the same as the rotation direction for fastening a fixing screw responsible for fastening with a fixture, and, as the result, when occlusal force is applied to the abutment through a prosthesis, force is applied a fixing screw at the lower portion in the fastening direction of the fixing screw while the occlusal force is transmitted through the helix-shaped spiral segments formed at the upper portion of the abutment, whereby it is possible to achieve an effect of preventing the fixing screw from loosening. In particular, the effect of preventing a fixing screw from loosening can be further achieved for an abutment in which the portion where a fixing screw and a prosthesis are coupled is integrally formed.

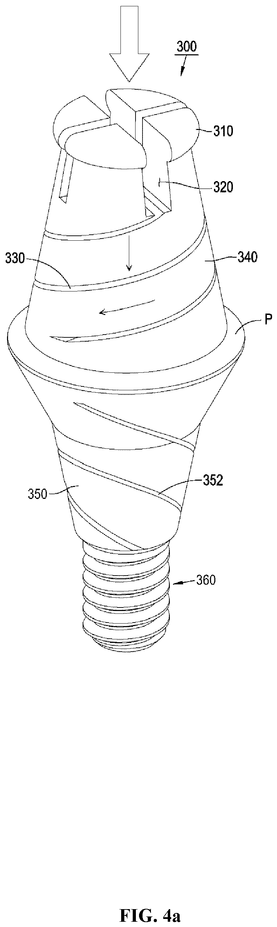

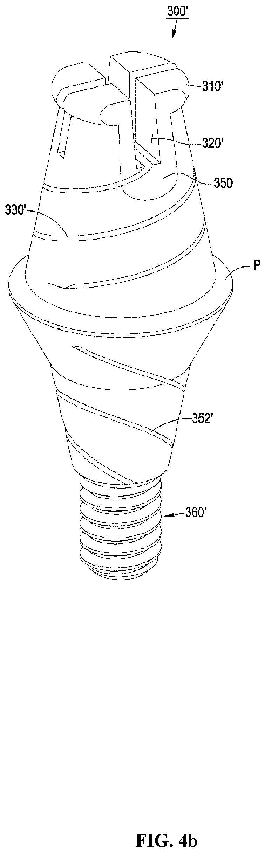

FIG. 4a is a perspective view of an abutment for implants according to another embodiment of the present disclosure and FIG. 4b is a perspective view of an abutment for implants according to another embodiment of the present disclosure.

Referring to FIG. 4a and FIG. 4b, an abutment 300 for dental implants in which a prosthesis mount and a threaded portion are integrally formed in accordance with another embodiment of the present disclosure includes a threaded portion 360 having a predetermined vertical length and having threads formed on the outer circumferential surface thereof, a prosthesis mount 340 integrally formed over the threaded portion such that a prosthesis is fixed thereto, and a body 350 connecting the threaded portion and the prosthesis mount and having a helix-shaped spiral cut portion 352 formed with a predetermined length in the longitudinal direction. The spiral cut portion 352 is formed with a predetermined length in the longitudinal direction of the vertical center axis of the body while horizontally crossing the vertical center axis of the body, thereby equally dividing a transverse plane perpendicular to the vertical center axis.

As described above, the upper outer surface of the prosthesis mount of the abutment on which a prosthesis is mounted, as shown in FIG. 4a, maintains a tapered angle decreasing the outer diameter upward from the portion P where the margin of a prosthesis is positioned, and prosthesis fastening protrusions 310 and 310' protruding outward from the tapered surface are formed at the right under the top by increasing the outer diameter lager than the portion right under the top. Further, as shown in FIG. 4a and FIG. 4b, cut portions 320 and 320' dividing the upper portion of the abutment into a plurality of segments start from the top of the abutment and continuously extend downward in a predetermined section and are then spirally or diagonally formed in a predetermined section. Preferably, the cut portions 320 and 320' are formed at at least one or more positions at the upper portion of the abutment, thereby being able to divide the upper portion of the abutment into two or more segments.

Segments having the protrusions formed on the upper outer surface and having a diameter larger than that of the portion right under the top, as described above, are deformed toward the vertical center axis and then restored into the initial shapes and fitted into grooves formed on the bottom of a hole in a prosthesis when the prosthesis is mounted, whereby the abutment and the prosthesis can be combined without an adhesive. Further, the segments have a spiral or diagonal helix shape turning in a predetermined section around the vertical center axis of the abutment by the spiral or diagonal cut portions, so they can attenuate occlusal force that is applied in mastication.

Preferably, a plane portion 35 having a tapered angle the same as or larger than the tapered angle of the abutment is formed at a portion of the circumferential surface on which the prosthesis fastening protrusion 310' is formed. The plane portion 370 complementarily performs the functions of specifying the seating direction of a prosthesis and preventing rotation of the prosthesis.

Referring to FIG. 1a and FIG. 1b, a fixing screw 100 that is separately provided for an abutment for dental implants of the present disclosure includes a threaded portion 12 having a predetermined vertical length and having threads 12a and 12b on the outer circumferential surface, a head 20 formed over the threaded portion and having a polygonal coupling groove 22 on top in which a screwdriver is fitted, and a body 10 connecting the threaded portion 12 and the head 20 and having a helix-shaped spiral cut portion 14 formed in the longitudinal direction.

Preferably, the spiral cut portion 14, as shown in FIG. 1b, is formed with a predetermined length in the longitudinal direction of the vertical center axis of the body 10 while horizontally crossing the vertical center axis of the body 10, thereby equally dividing a transverse plane perpendicular to the vertical center axis. The spiral cut portion 14 may be formed selectively clockwise or counterclockwise. Further, the spiral cut portion 14 may be selectively formed also in the threaded portion 12. Further, the body 10 may extend under the threaded portion 12 and a spiral cut portion 16 may be further formed also on the extension of the body 10.

Further, the cutting direction of the helix-shaped spiral cut portion formed between the head and the threaded portion of the fixing screw may be the same as the forming direction of the threaded portion of the fixing screw.

Referring to FIG. 2a and FIG. 2b, the abutment 200 for dental implants of the present disclosure has a plurality of slots 240 and 240' circumferentially formed at the lower portion of the abutment that is inserted into a hole of a fixture. Preferably, a plurality of slots 240 and 240' having at least one closed end and passing through the inner and outer surfaces is circumferentially formed with regular intervals at the lower portion of the abutment that is inserted into a hole of a fixture. Preferably, the slots 240 and 240' may be formed in diagonal, vertical, or horizontal line shapes.

When a fixing screw is strongly tightened, a plurality of independent surfaces circumferentially formed comes in close contact with an inclined surface of the inner surface of a hole of a fixture while deforming within the range of elasticity by the diagonal slots 240 and 240', and in this process, the elastic resilient force generated by the close contact surfaces generates force pushing up the abutment, thereby generating a force continuously pushing up the head of the fixing screw being in contact with a fixing screw anti-descending step D of the abutment. As a result, the upper surfaces of the threads of the fixing screws are strongly brought in close contact with the lower surfaces of the threads formed the inner surface of the hole of the fixture, whereby it is possible to prevent loosening of the fixing screw.

Further, the plurality of independent surfaces circumferentially formed attenuates continuous occlusal force that is applied in mastication by continuously deforming and restoring and this action prevents a cold pressure welding phenomenon due to strong close contact of the abutment with the insertion hole of the fixture, whereby it is possible to always easily separate the abutment from the fixture when it is required to separate them.

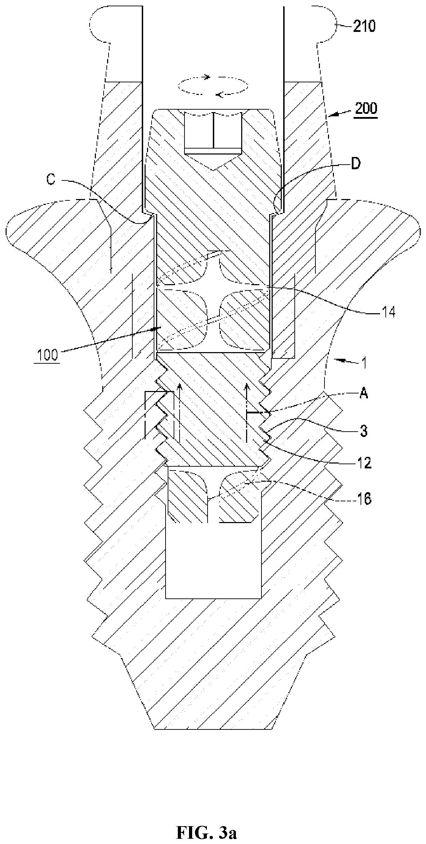

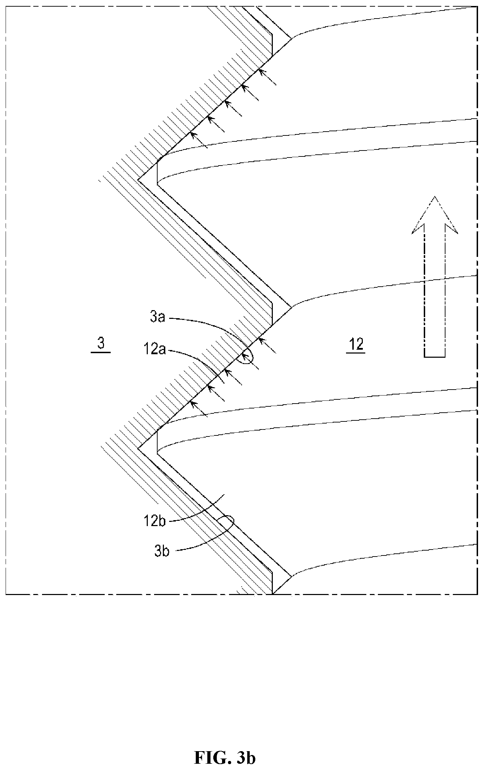

FIG. 3a is a cross-sectional view showing the state in which a fixing screw of FIG. 1a separately provided in accordance with an embodiment of the present disclosure has been coupled to the abutment for implants of FIG. 2a and FIG. 3b is a conceptual view showing the operation of a fixing screw to an abutment for implants in the coupled state of FIG. 3a.

Referring to FIG. 3a and FIG. 3b, the spiral cut portion 14 formed on the body 10 of the fixing screw 100 increases the elastic deformation force and the elastic restoring force of the fixing screw itself, thereby enabling a fixing screw of the present disclosure to more firmly fasten an abutment to a fixture in comparison to fixing screws of the related art. That is, the absolute available elastic deformation length of the fixing screw 100 of the present disclosure is increased and the fixing screw 100 has larger elastic restoring force after elastic deformation by the spiral cut portion 14, so the fixing screw can keep more fastening energy, that is, larger fastening force, and accordingly, it can have a fastening force larger than those of fixing screws of the related art, whereby it is possible to prevent problems of loosening of a fixing screw, etc.

The spiral cut portion 14 may be formed in at least a predetermined section between the upper end and the lower end of the body 10, and preferably, the spiral cut portion 14 is formed at the portion of the body 10 that connects the threaded portion 12 and the head 10. Referring to FIG. 3a and FIG. 3b, when the fixing screw 100 keeps being strongly tightened with the threaded portion 12 of the fixing screw 10 and the threads 13 formed on the inner surface of the hole of the fixture 1 engaged, the fixing screw 100 extends by a predetermined length with the limit of elastic deformation by the elasticity of the spiral cut portion 13 and the threaded portion 12 of the fixing screw is strongly pulled upward, as indicated by arrows in FIG. 3a, by the elastic restoring force of the spiral cut portion 14. Accordingly, as shown in FIG. 3b, the upper surfaces 12a of the threads of the fixing screw are strongly brought in contact with the lower surfaces 3a of the threads correspondingly formed on the inner surface of the hole of the fixture 10, so larger fastening force can be secured between the engaged threads, and accordingly, loosening of the fixing screw can be greatly reduced.

The forming direction of the helix-shaped spiral cut portion formed between the head and the threaded portion of the fixing screw may be the same as the forming direction of the threaded portion of the fixing screw.

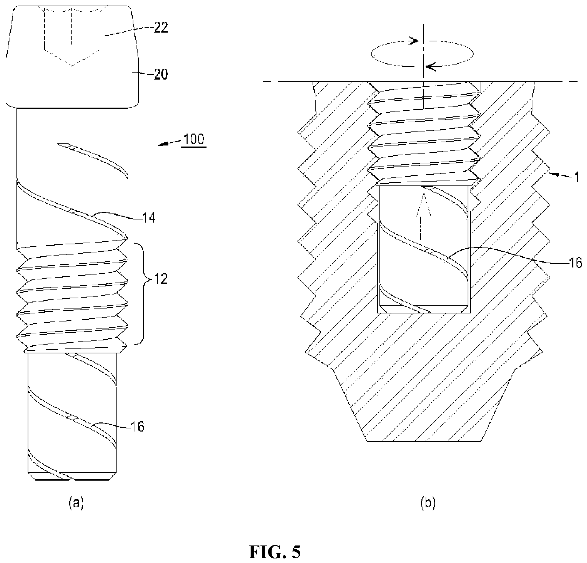

Preferably, as shown in FIG. 5, the spiral cut portion 16 may be formed in a helix shape also under the threaded portion 12 formed on the body 10. In this case, when the fixing screw 100 keeps being strongly tightened even after the end of the fixing screw comes in contact with the bottom of a hole of a fixture, the helix-shaped spiral cut portion under the threaded portion is compressed with the bottom of the hole of the fixture and the bottom of the fixing screw in contact with each other, whereby elastic restoring force is generated and the threaded portion of the fixing screw is strongly pushed up by the elastic restoring force. Accordingly, similar to FIG. 3b, the upper surfaces 12a of the threads of the fixing screw are strongly brought in contact with the lower surfaces 3a of the threads correspondingly formed on the inner surface of the hole of the fixture 10, so larger fastening force can be secured, and accordingly, loosening of the fixing screw can be greatly reduced. The fixing screw of the present disclosure may be made of metal having high elasticity like Ni-Ti alloys.

More preferably, the head 20 of the fixing screw 10, as shown in FIG. 1a, may further has an anti-screw fastening protrusion 26 at a predetermined portion of the outer circumferential surface. For example, when the abutment 200 for dental implants of FIG. 2a is fastened to a fixture by the fixing screw 10 of FIG. 1a, the anti-screw fastening protrusion 26 is fitted into the spiral or diagonal cut portion 230 formed at the upper portion of the abutment, whereby it is possible to complementarily prevent loosening of the fixing screw.

As described above, the fixing screw 100 can secure elasticity and elastic restoring force that are larger than those of existing fixing screws by the spiral cut portions 14 and 16 as long as it deforms within the limit of elastic deformation, so it is possible to keep, at a higher level, the force that strongly presses the lower surfaces 3a of the threads formed on the inner surface of a hole of a fixture in a contact state by the upper surfaces 12a of the threads of the fixing screw, and accordingly, there is the advantage that the fastening force that fastens the abutment 15 to the fixture 1 does not decrease even after a long time.

Referring to FIG. 1a and FIG. 5, the spiral cut portions 14 and 16 formed on the body of the fixing screw can perform the function of attenuating stress by the structural features and elastic restoring force thereof. That is, even though lateral pressure is applied to an abutment in various directions by occlusal force, etc. and force that laterally pushes a fixing screw or pushes up the head of the fixing screw is generated, the structure of the spiral cut portion itself can attenuate the force, and accordingly, stress that is applied from the side or from above is not accumulated in the fixing screw itself, so the possibility of fracture of the fixing screw considerably decreases.

Further, the problems of the internal type in which the lower portion of an abutment is inserted and fastened in a hole of a fixture in the related art can also be solved by the elastic restoring operation of the spiral cut portion of the present disclosure. That is, as described above, even after a fixing screw is initially fastened by strong fastening force, sinking that an abutment moves down over time may occur. However, even though an abutment is moved down from the initial fastening position due to such sinking, the head at the upper end of a fixing screw is also pulled down by the elastic restoring operation of the spiral cut portion, so the strong fastening force can be maintained.

Meanwhile, even though a fixing screw fractures due to various reasons, fracture is generated at the portion where the spiral cut portion is formed that is a relatively weak point, and in this case, as shown in FIG. 1b, the spiral cut portion crossing the vertical center axis is straightly exposed on the fracture surface. Accordingly, it is possible to easily remove the fracture of the fixing screw remaining on the inner surface of the hole of a fixture by inserting a flathead screwdriver into the straight cut portion and turning it.

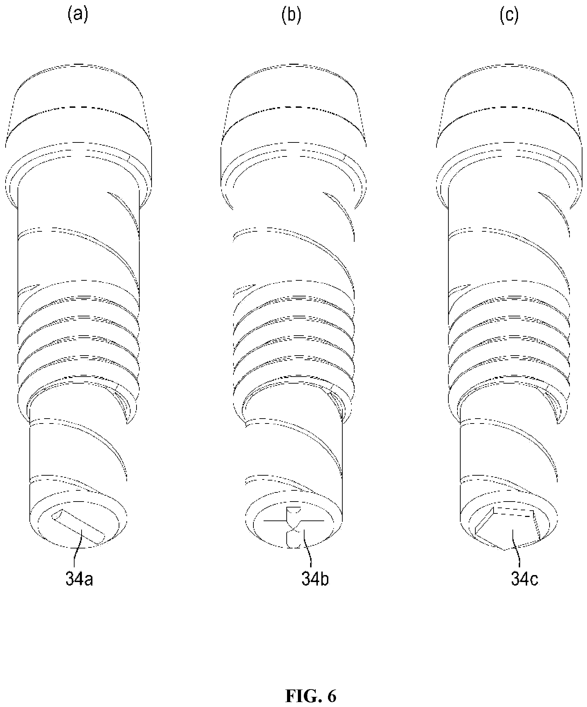

FIG. 6 is a perspective view of a fixing screw according to another embodiment of the present disclosure. Referring to FIG. 6, a helix-shaped spiral cut portion is formed at the lower portion of the threaded portion of a fixing screw of the present disclosure, a straight, cross, or polygonal protrusion is formed on the lowermost bottom of the fixing screw, and a groove corresponding thereto is formed on the lowermost surface of a hole of a fixture, whereby it is possible to specify a fastening rotation position of the fixing screw and additionally perform the function of preventing loosening of a fixing screw.

That is, while the fixing screw is tightened, the protrusion on the bottom of the fixing screw comes in contact first with a surface higher than the lowermost surface on which the corresponding groove is formed of the bottom of a hole of a fixture. In this state, when the fixing screw keeps being tightened, the helix-shaped spiral cut portion under the threaded portion of the fixing screw is rotated while being compressed. Further, the protrusion on the lowermost bottom of the fixing screw is fitted into the groove on the lowermost surface of the hole of the fixture at the point where the protrusion on the lowermost bottom of the fixing screw and the corresponding groove formed on the lowermost surface of the hole of the fixture are aligned, by the elastic restoring force of the spiral cut portion under the threaded portion of the fixing screw. Horizontal rotation force over a predetermined level has to be directly applied to the fixing screw to remove this coupling, so an anti-loosening function that prevents a fixing screw from being loosened by normal occlusal force can be performed.

FIG. 8 is a cross-sectional view of a modified embodiment in which the slope of the outer surface of an abutment has been changed in accordance with another embodiment of the present disclosure. Referring to FIG. 8, the slope of the outer surface of the abutment is changed at least twice between an upper point A of a maximum diameter portion of the abutment at which the margin of a prosthesis is positioned (preferably, 1.5mm upper point) and a portion B right under a prosthesis fastening protrusion 210'. That is, the outer surface of the abutment may be composed of a first inclined outer surface L1, a first vertical outer surface L2, a second inclined outer surface L3, and a second vertical outer surface L4 sequentially upward from the upper point A of the maximum diameter portion of the abutment. Since the outer surface of the abutment is configured to have at least two or more-time slope variations, as described above, it is possible to additionally secure the horizontal thickness of the prosthesis fastening protrusion at the upper portion of the abutment, and as a result, it is possible to reinforce and increase the coupling strength when a prosthesis is fastened to the prosthesis fastening protrusion at the upper portion of the abutment. For example, when the same inclination angle is given from the upper point A of the maximum diameter portion of the abutment to the lower end of the prosthesis fastening protrusion, the horizontal thickness of the prosthesis fastening protrusion at the upper portion of the abutment is too small, so when a prosthesis is fastened later, the prosthesis is not firmly coupled and supported, which may cause problems of loosening or fracturing of the prosthesis.

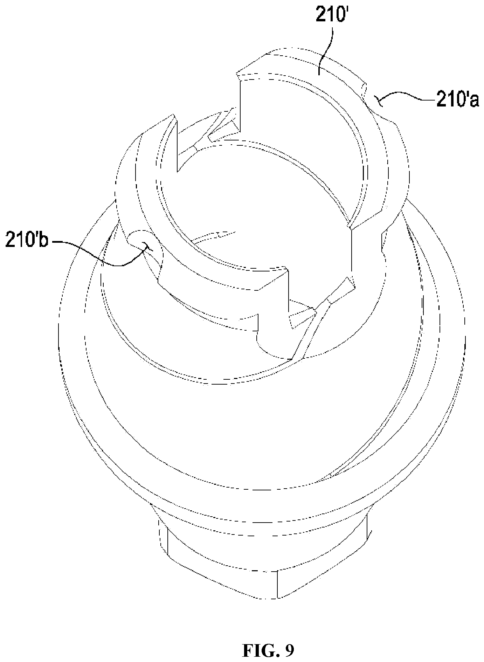

FIG. 9 is a perspective view of a modified embodiment of prosthesis-fastening protrusions according to another embodiment of the present disclosure. Referring to FIG. 9, a prosthesis seat recession 210a' recessed inward is additionally formed on a prosthesis fastening protrusion 210', so it is possible to specify the fastening position of a prosthesis and prevent rotation of the prosthesis when mounting the prosthesis. That is, the prosthesis seat recession 210a' not only enables an operator to specify the exact fastening position where a prosthesis is located when mounting the prosthesis, but can prevent the prosthesis from being rotated later by force that is applied to the prosthesis after the prosthesis is mounted.

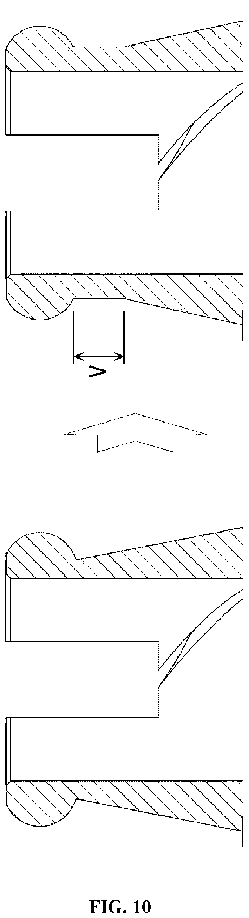

FIG. 10 is a cross-sectional view of a modified embodiment of the upper portion of an abutment according to another embodiment of the present disclosure. Referring to FIG. 10, the slope of the outer surface of the portion in a predetermined section right under the prosthesis fastening protrusion may have a slope smaller than the slope of the outer surface of the portion corresponding to lower 1/3 of the section between the maximum outer diameter portion of the abutment where the margin of a prosthesis is positioned and the upper end of the abutment, and, depending on cases, a vertical section with a slope of zero that maintains the same diameter in a predetermined section may be formed. When a prosthesis is attached and detached several times to and from a prosthesis fastening protrusion of an abutment, problems of wearing or breaking of the sharply protruding portion (indicated by a circle) inside the prosthesis may occur. Accordingly, an inclined section having a small slope or a vertical section having a slope of zero is formed in a predetermined section under the portion right under the prosthesis fastening protrusion, so it is possible to reinforce the durability of a prosthesis itself that is coupled in correspondence to the portion right under the fastening protrusion of the abutment.

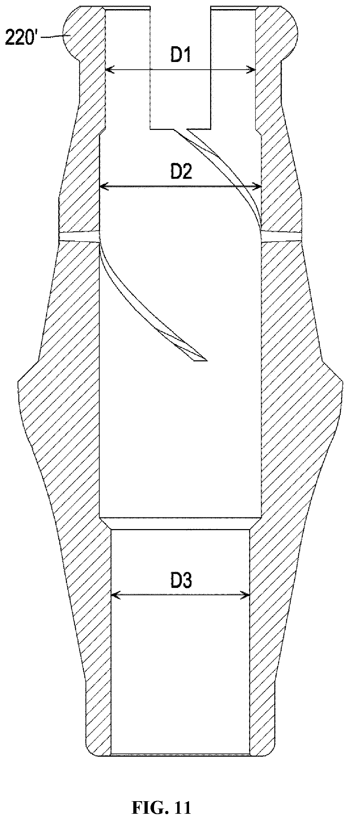

FIG. 11 is a cross-sectional view of an abutment for implants according to another embodiment of the present disclosure. Referring to FIG. 11, a through-hole formed from the top to the bottom of the abutment is configured such that the inner diameter D1 of the upper portion of the through-hole is maintained in a predetermined section and increases into a larger inner diameter D2 under the predetermined section. According to the structure of this through-hole, the thickness of the fastening portion at the upper portion of the abutment where a prosthesis fastening protrusion 220' is positioned is increased, so it is possible to additionally reinforce the coupling strength when fastening a prosthesis. Preferably, the inner diameter D3 of the lower portion of the through-hole may be smaller than the inner diameter D1 of the upper portion of the through-hole.

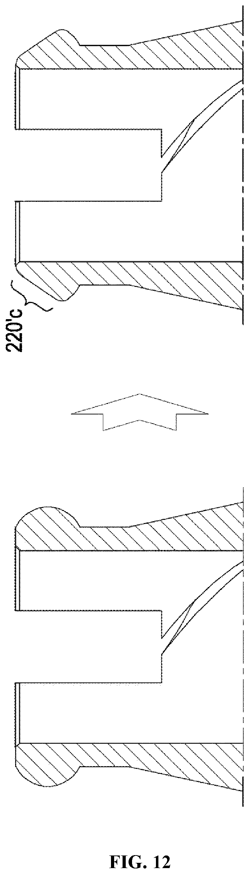

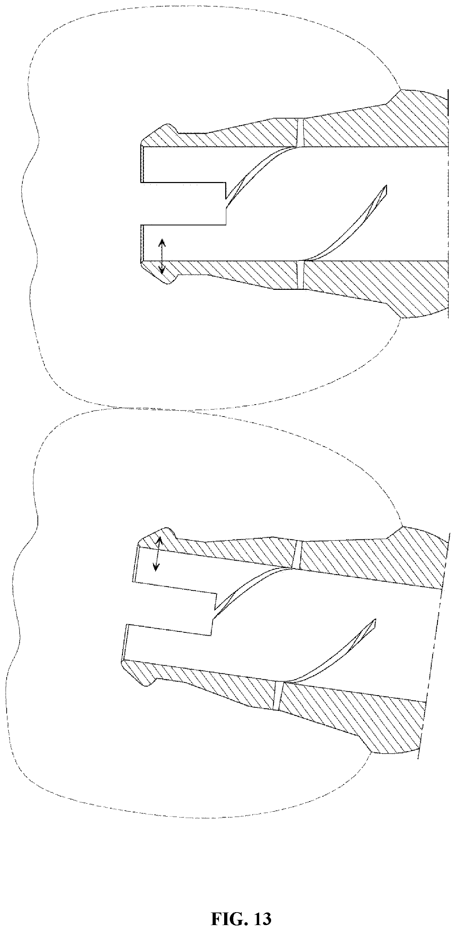

FIG. 12 is a cross-sectional view of a modified embodiment of prosthesis fastening protrusions according to another embodiment of the present disclosure and FIG. 13 is a reference view for describing effects that can be obtained when applying the abutment according to the modified embodiment shown in FIG. 12. Referring to FIG. 12, the prosthesis fastening protrusion is configured such that the outer diameter gradually increases downward from the upper end, so the prosthesis fastening protrusion is formed asymmetrically up and down with respect to the maximum contour point of the prosthesis fastening protrusion in a vertical cross-section of the prosthesis fastening protrusion such that a partial outer surface 220c' of the prosthesis fastening protrusion can have a slope of predetermined angle. For example, when the partial outer surface 220c' of the prosthesis fastening protrusion is inclined, the upper end of the inclined outer surface 220c' can be more easily inserted and fitted into a coupling hole of a prosthesis. Accordingly, as shown in FIG. 13, particularly, even though the implantation angle of an adjacent abutment is excessively large and a prosthesis is not easily fastened due to interference between adjacent prostheses, the upper end of the outer surface 220c' of the prosthesis fastening protrusion can be fitted into the coupling hole of the prosthesis with smaller resistance. When the prosthesis is pressed toward the abutment after fitting, the prosthesis fastening protrusion having a cut portion therein reduces resistance while deforming inward, and simultaneously, the prosthesis can relatively easily enter while sliding on the inclined outer surface 220c' of the prosthesis fastening protrusion.

Further, it may be possible to prevent foreign substances from entering and further reinforce the elasticity of an abutment of the present disclosure by filling the gap between the abutment and a prosthesis with an elastic polymer material such as medical silicone when fixing the prosthesis to the abutment.

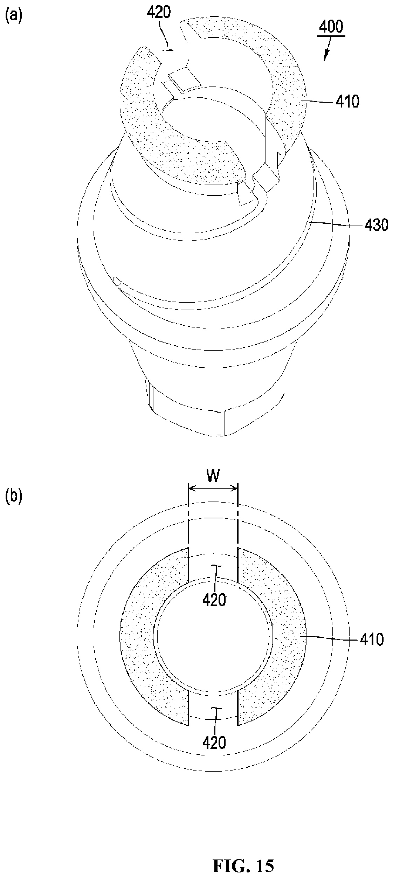

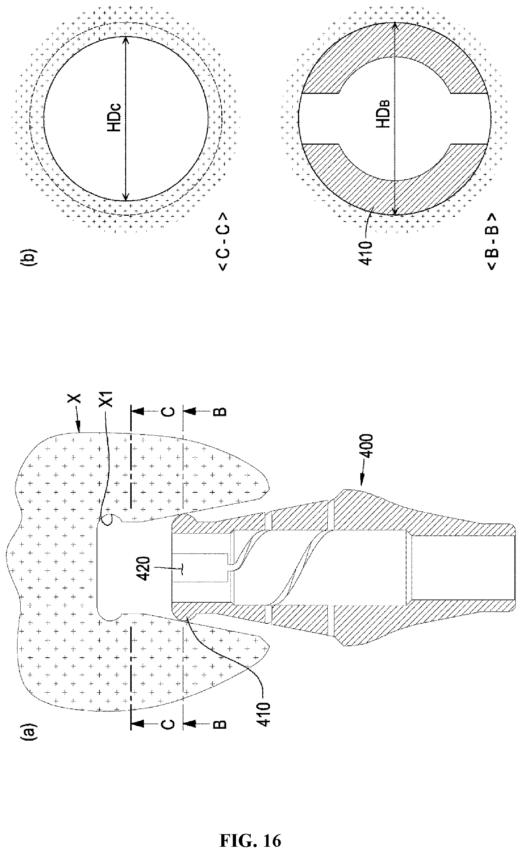

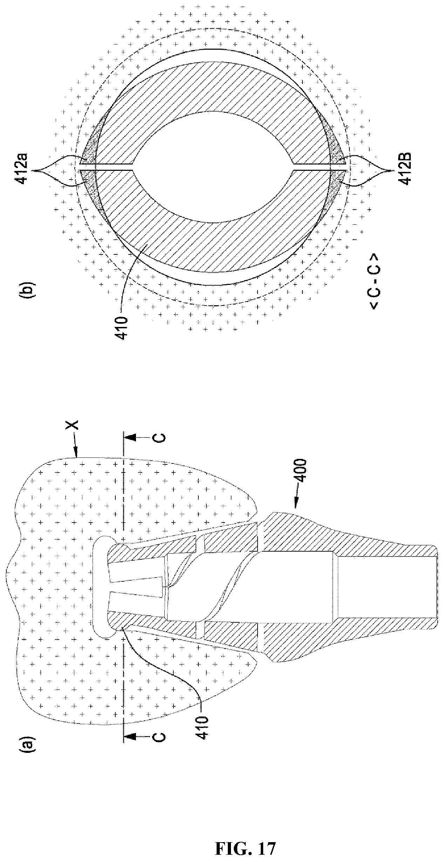

FIG. 15(a) is a perspective view of an abutment for implants according to another embodiment of the present disclosure and FIG. 15(b) is a plan view showing FIG. 15(a) from above. FIG. 16(a) is a cross-sectional view showing a step in which a prosthesis X starts to be coupled to the upper portion of the abutment for implants shown in FIG. 15(a) and FIG. 16(b) shows cross-sections taken along lines B-B and C-C of FIG. 16(a). FIG. 17(a) is a cross-sectional view showing an assumed step immediately before a prosthesis X is fastened to the upper portion of the abutment for implants shown in FIG. 15(a) and FIG. 17(b) shows a cross-section taken along line A-A of FIG. 17(a) to show interference (or obstruction) portions that are generated when a prosthesis is coupled.

An abutment 400 for dental implants according to another embodiment of the present disclosure is formed such that the outer diameter of the top of the upper portion of the abutment on which a prosthesis is mounted is larger than the outer diameter of the portion right under the top, and includes a prosthesis fastening protrusion 410 protruding outward and cut portions 420 dividing the upper portion of the abutment into a plurality of segments.

Referring to FIG. 15(a) and FIG. 16(a), the a prosthesis fastening protrusion 410 of the abutment 400 is inserted into a coupling hole of a prosthesis X and fitted into a fastening groove X1 of the coupling hole. Referring to FIG. 16(b), the diameter HD_{B} of the coupling hole in the cross-section line B-B in FIG. 16(a) is larger than the diameter HD_{C} of the coupling hole in the cross-section of line C-C. The prosthesis fastening protrusion 410 of the abutment 400 is gradually deformed toward the cut portions through the portion between the line B-B and the line C-C. Assuming that the prosthesis fastening protrusion 410 of the abutment 400 reaches the line C-C, as shown in FIG. 17(a), the outer diameter of the upper and lower ends 412a and 412b of the prosthesis fastening protrusion 410 is larger than the diameter HD_{C} of the coupling hole in the cross-section of line C-C, as shown in FIG. 17(b). That is, when a prosthesis is coupled to the abutment, interference that makes entry impossible is generated between the upper and lower ends 412a and 412b of the prosthesis fastening protrusion 410 and the coupling hole in the cross-section of line C-C. Accordingly, in actual fitting, the fastening protrusion 410 of the abutment 400 cannot reach the line C-C, and as a result, the fastening protrusion 410 of the abutment 400 cannot be fitted into the fastening groove X1 of the prosthesis.

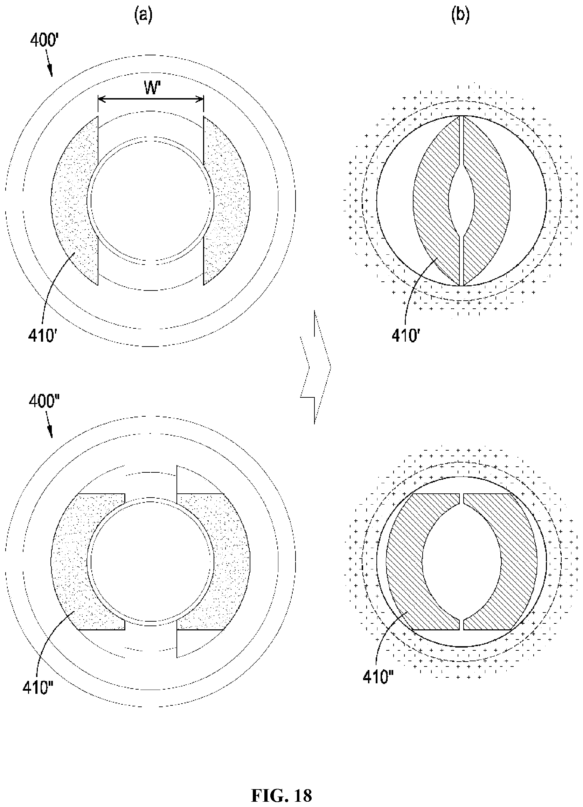

In relation to this, FIG. 18(a) is a plan view of modified embodiments of prosthesis fastening protrusions additionally cut to remove the interference portions shown in FIG. 17(b) and FIG. 18(b) shows cross-sectional taken along line C-C when the prosthesis fastening protrusions of FIG. 18(a) are inserted to corresponding positions of FIG. 17(a).

That is, the prosthesis fastening protrusion of the abutment can pass through the cross-section of line C-C only when the interference portions shown in FIG. 17(b), that is, the upper and lower ends 412a and 412b of the prosthesis fastening protrusion 410 are removed, so, as shown in FIG. 18(a), machining of increasing the width of the cut portions (the upper one in FIG. 18(a)) or removing the interference portions is performed. When the structure of the prosthesis fastening protrusion 410 is changed in this way, the prosthesis fastening protrusions 410' and 410" can pass through the cross-section of line C-C of the coupling hole without interference, as shown in FIG. 18(b).

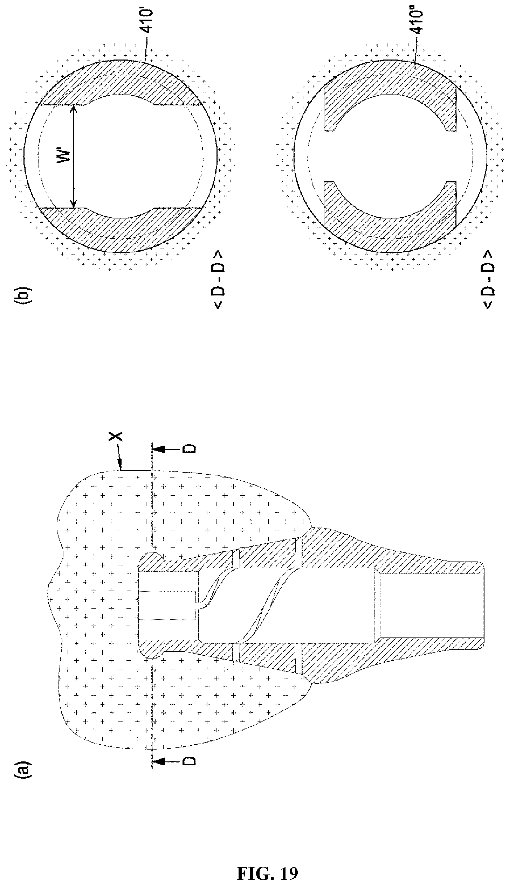

FIG. 19(a) is a cross-sectional view showing the state in which a prosthesis X has been fully fastened to the upper portion of the abutment for implants shown in FIG. 18(a) and FIG. 19(b) shows a cross-section taken along line D-D of FIG. 19(a).

That is, the prosthesis fastening protrusions 410' and 410" with the structure changed as described above pass through the cross-section of line C-C and are then fitted into the fastening groove of the prosthesis, as shown in FIG. 19(a), and, in this case, as shown in FIG. 19(b), the prosthesis fastening protrusions 410' and 410" are elastically restored to be fitted into the fastening groove of the prosthesis.

However, in this case, the width W' of the cut portions has to be increased much larger than the width W of the cut portions of FIG. 15(a) or the upper and lower ends of the prosthesis fastening protrusion should be removed, there is a limitation that the structural strength of the prosthesis fastening protrusion that is coupled to the prosthesis is deteriorated.

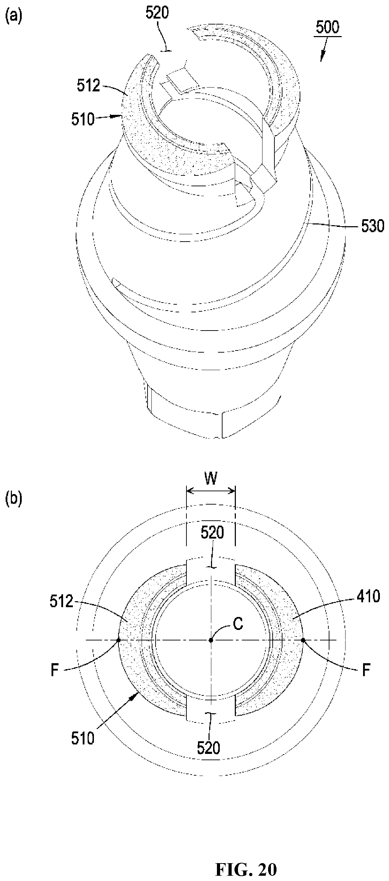

FIG. 20(a) is a perspective view of an abutment for implants according to another embodiment of the present disclosure and FIG. 20(b) is a plan view showing FIG. 20(a) from above.

Referring to FIG. 20(a), an abutment 500 for dental implants according to another embodiment of the present disclosure is formed such that the outer diameter of the top of the upper portion of the abutment on which a prosthesis is mounted is larger than the outer diameter of the portion right under the top, and includes a prosthesis fastening protrusion 510 protruding outward and cut portions 520 dividing the upper portion of the abutment into a plurality of segments.

Referring to FIG. 20(b), the prosthesis fastening protrusion 510 has a shape (hereafter, referred to as a 'specific shape') in which, when seen in a horizontal cross-sectional view, the distance value from the vertical center axis C of the abutment to the outer surface of the fastening protrusion continuously decreases as it goes to the cut portions 520, and particularly, the distance value is the largest at the centers F of the outer surfaces of the segments separated by the cut portions 520.

For example, as shown in FIG. 20(b), each of the prosthesis fastening protrusions separated into a plurality of segments by the cut portions 520 may have a specific shape of a crescent shape when seen from above.

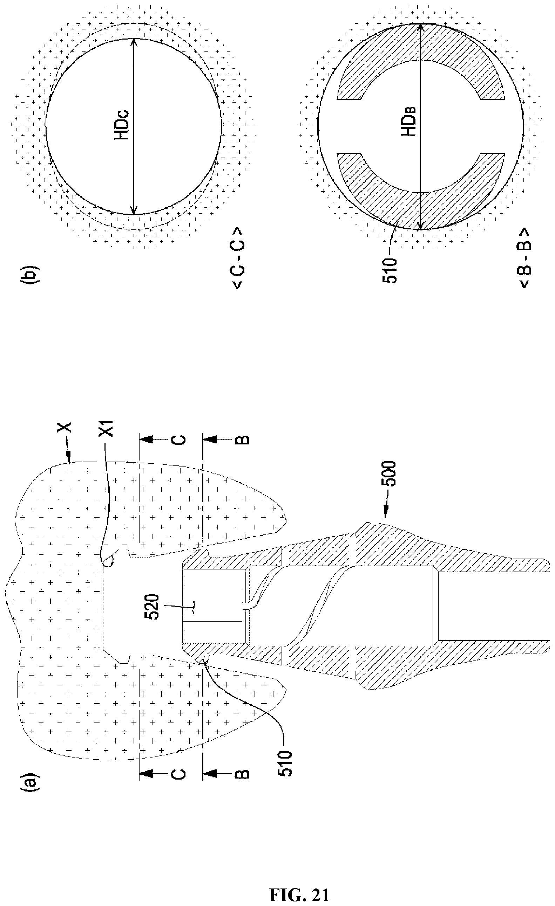

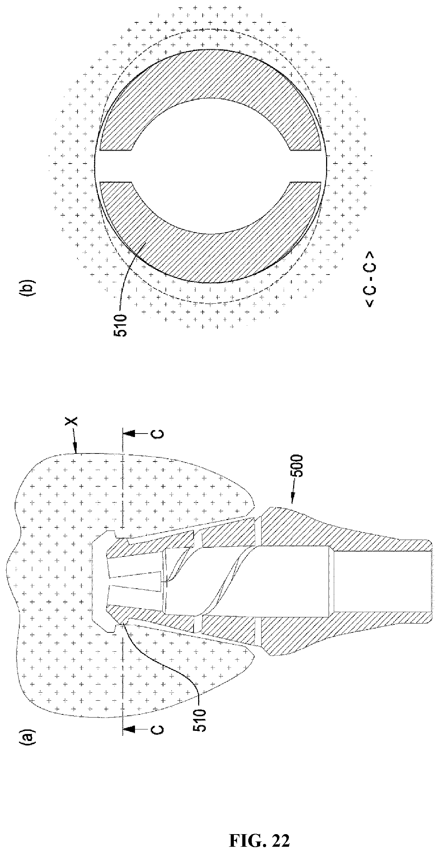

FIG. 21(a) is a cross-sectional view showing a step in which a prosthesis X starts to be coupled to the upper portion of the abutment for implants shown in FIG. 20(a) and FIG. 21(b) shows cross-sections taken along lines B-B and C-C of FIG. 26(a). FIG. 22(a) is a cross-sectional view showing a step right before a prosthesis X is fastened to the upper portion of the abutment for implants shown in FIG. 20(a) and FIG. 22(b) shows a cross-section taken along line C-C of FIG. 22(a).

Referring to FIG. 21(a), a coupling hole having a circular cross-section is formed by a predetermined length in the prosthesis X, and a fastening groove X1 corresponding to the prosthesis fastening protrusion 510 is formed at the upper portion inside the coupling hole. When the prosthesis X is fitted onto the upper portion of the abutment 500 for dental implants, and, as shown in FIG. 22(a), when the prosthesis fastening protrusion 510 reaches the cross-section of line C-C of the coupling hole, the prosthesis fastening protrusions separated into a plurality of segments are deformed toward the cut portions 520, as shown in FIG. 22(b). As a result, all of the deformed prosthesis fastening protrusions are made into a shape corresponding to the coupling hole of the prosthesis. In this case, any interference is not generated between the prosthesis fastening protrusions and the coupling hole of the prosthesis, and accordingly, it is not required to change the structure such as removing interference portions or increasing the width of the cut portions of an abutment, unlike the previous embodiment. Therefore, there is the advantage of not only securing force for coupling with a prosthesis, but increasing the structural strength of the prosthesis fastening protrusion supporting occlusal force that is applied.

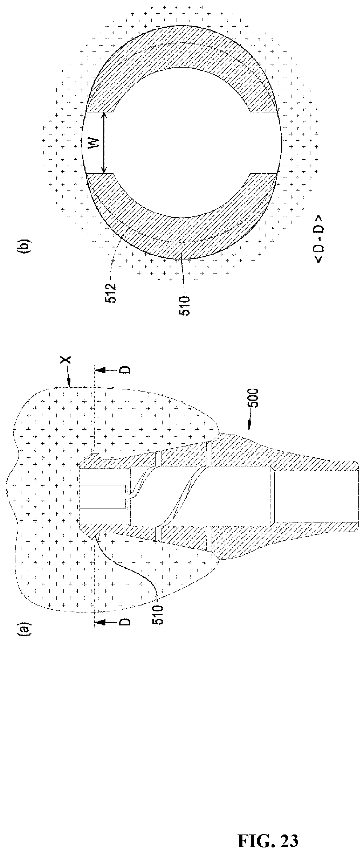

FIG. 23(a) is a cross-sectional view showing the state in which a prosthesis X has been fully fastened to the upper portion of the abutment for implants shown in FIG. 20(a) and FIG. 23(b) shows a cross-section taken along line D-D of FIG. 23(a).

Referring to FIG. 23(a), a prosthesis fastening protrusion 510 passes through the cross-section of line C-C and is then fitted into the fastening groove of the prosthesis, as shown in FIG. 23(a), and, in this case, the prosthesis fastening protrusion 510 is elastically restored to be fitted into the fastening groove of the prosthesis, as shown in FIG. 23(b). In particular, the fastening groove of the prosthesis 510 configured to protrude outward at different levels, depending on positions, on the outer surfaces of the segments separated in multiple numbers by the cut portions formed at the upper portion of the abutment is deformed and then elastically restored, thereby being inserted into the coupling hole of the prosthesis and fitted into the corresponding shape of the fastening groove of the prosthesis. Accordingly, it is possible to prevent rotation of a prosthesis and specify the fastening position of the prosthesis.

That is, as shown in FIG. 23(b), when the fastening groove of the prosthesis 510 is elastically restored and fitted into the fastening groove of the prosthesis, the entire of the elastically restored fastening groove of the prosthesis 510, for example, has an elliptical shape. Accordingly, it is easy to specify the fastening position when fastening a prosthesis and it is possible to achieve the function of preventing rotation of a prosthesis, as compared with the structure having a circular shape.

The present disclosure was described above in detail in relation to specific embodiments with respect to drawings, but the present disclosure is not limited such specific structures. Those skilled in the art could change or modify the present disclosure in various ways even without departing from the spirit and the range of right of the present disclosure described in the following claims. However, it should be noted that such simple material modifications or changed structures in design are all definitely included in the range of right of the present disclosure.

## Claims

1. An abutment for dental implants, the abutment comprising:
prosthesis fastening protrusions formed such that an outer diameter of an upper end of an upper portion of the abutment on which a prosthesis is mounted is larger than an outer diameter of a portion right under the upper end, and protruding outward; and
cut portions dividing the upper portion of the abutment into a plurality of segments,
wherein prosthesis fastening protrusions have shapes in which distance values from a vertical center axis (C) of the abutment to outer surfaces of the fastening protrusions are different, depending on positions, when seen in a horizontal cross-sectional view.

2. The abutment of claim 1, wherein the cut portions start from a top of the abutment and continuously extend downward in a predetermined section and are spirally or diagonally formed in a predetermined section.

3. The abutment of claim 1, wherein a lower cut portion width of the cut portions is smaller than a cut portion width of an upper end.

4. The abutment of claim 1, wherein a downward cutting direction of a cutting section of the spiral or diagonal cut portions is the same as a rotation direction for fastening a fixing screw responsible for fastening the abutment and a fixture.

5. The abutment of claim 1, wherein the abutment is fastened to a fixture by a fixing screw; a fixing screw comprises a threaded portion having a predetermined vertical length and having threads formed on an outer circumferential surface, a head formed over the threaded portion and having a coupling hole in which a screwdriver is inserted on a top thereof, and a body connecting the threaded portion and the head and having a helix-shaped spiral cut portion formed with a predetermined length in a longitudinal direction; and the spiral cut portion is formed with a predetermined length in a longitudinal direction of a vertical center axis of the body while horizontally crossing the vertical center axis of the body to equally divide a transverse plane perpendicular to the vertical center axis.

6. The abutment of claim 1, wherein a plurality of slots having at least one closed end and passing through inner and outer surfaces is circumferentially formed with regular intervals at a lower portion of the abutment that is inserted into a hole of a fixture.

7. The abutment of claim 6, wherein the slots are formed in diagonal, vertical, or horizontal line shapes.

8. The abutment of claim 5, wherein the head of the fixing screw further has an anti-screw fastening protrusion at a predetermined portion of an outer circumferential surface, and when the fixing screw is fastened, the anti-screw fastening protrusion is fitted in a spiral or diagonal cut portion formed at the upper portion of the abutment, thereby preventing loosening of the fixing screw.

9. The abutment of claim 2, wherein a plane portion is formed as an inclined surface.

10. The abutment of claim 1, wherein a the slope of an outer surface of the abutment is changed at least twice between an upper point (A) of a maximum diameter portion of the abutment at which a margin of a prosthesis is positioned and a portion right under the prosthesis fastening protrusions.

11. The abutment of claim 1, wherein a prosthesis seat recession recessed inward is additionally formed on the prosthesis fastening protrusions, and specifies a fastening position of a prosthesis and prevents rotation of the prosthesis when the prosthesis is mounted.

12. The abutment of claim 1, wherein a predetermined section right under the prosthesis fastening protrusions is formed with a slope smaller than a slope of an outer surface of a portion corresponding to lower 1/3 of a section between a maximum outer diameter portion of the abutment where a margin of a prosthesis is positioned and the upper end of the abutment, or has a slope of zero.

13. The abutment of claim 1, wherein a through-hole formed from a top to a bottom of the abutment is configured such that an inner diameter of an upper portion of the through-hole is maintained in a predetermined section and increases into a larger inner diameter under the predetermined section.

14. The abutment of claim 1, wherein the prosthesis fastening protrusion is formed asymmetrically (220c') up and down with respect to a maximum contour point of the prosthesis fastening protrusion in a vertical cross-section of the prosthesis fastening protrusion.

15. The abutment of claim 1, wherein the prosthesis fastening protrusion has a shape in which, when seen in a horizontal cross-sectional view, a distance value from the vertical center axis (C) of the abutment to an outer surface of the fastening protrusion continuously decreases as going to the cut portions, and the distance value is the largest at centers (F) of outer surfaces of segments separated by the cut portions.

16. The abutment of claim 1, wherein a coupling hole having a circular cross-section is formed by a predetermined length in the prosthesis, a fastening groove corresponding to the prosthesis fastening protrusions is formed at an upper portion inside the coupling hole, and when the prosthesis is fitted onto the upper portion of the abutment for dental implants, the prosthesis fastening protrusions separated into the plurality of segments are deformed toward the cut portions, whereby all of the deformed prosthesis fastening protrusions are made into a shape corresponding to a coupling hole of the prosthesis.

17. The abutment of claim 16, wherein prosthesis fastening protrusions configured to protrude outward with different levels, depending on positions, from centers of inner surfaces of a plurality of segments separated by the cut portions formed on the upper portion of the abutment are deformed and then elastically restored, and fitted into a corresponding shape of the fastening groove of the prosthesis, thereby making it possible to prevent rotation of the prosthesis and specify a fastening position of the prosthesis.
